Europäisches Patentamt

European Patent Office

Office européen des brevets

(11) Veröffentlichungsnummer: **0 001 552**
**B1**

(12) **EUROPÄISCHE PATENTSCHRIFT**

(21) Anmeldenummer: **78100883.4**

(22) Anmeldetag: **14.09.78**

(51) Int. Cl.³: **B 60 J 3/00**

(54) **Sonnenblende für Fahrzeuge**

(30) Priorität: **14.10.77 DE 2746163**

(43) Veröffentlichungstag der Anmeldung:
**02.05.79 Patentblatt 79/09**

(45) Bekanntmachung des Hinweises auf die Patenterteilung:
**07.01.81 Patentblatt 81/01**

(84) Benannte Vertragsstaaten:
**BE FR GB NL SE**

(56) Entgegenhaltungen:
**DE - A - 2 423 615**

(73) Patentinhaber: **Gebr. Happich GmbH**
**Postfach 10 02 49 Clausenbrücke 1**
**D - 5600 Wuppertal 1 (DE)**

(72) Erfinder: **Meissner, Wolfgang**
**Eickenstrasse 3**
**D - 5802 Wetter 4 (DE)**

Courier Press, Leamington Spa, England.

## Sonnenblende für Fahrzeuge

Die Erfindung betrifft eine Sonnenblende für Fahrzeuge, im wesentlichen bestehend aus einem relativ flachen, länglich ausgebildeten Sonnenblendenkörper mit einer in einer Umpolsterung eingelagerten, eine Netz- oder Gitterstruktur aufweisenden Verstärkungseinlage aus Kunststoff, die eine ihren Umfang abgrenzende peripherische Rahmenleiste mit zwei an einem Längsrand im Abstand voneinander angeformten und miteinander fluchtenden Lagernaben und eine dürch winklig zur fluchtebene der Lagernaben ausgerichtete Streben gebildete Netz- oder Gitterstruktur aufweist.

Aus Gründen der Fertigungsvereinfachung werden die Sonnenblendenkörper anstelle der herkömmlichen Drahtrahmen in zunehmendem Maße mit Verstärkungseinlagen aus Kunststoffmaterial ausgerüstet. Die Verstärkungseinlagen besitzen eine relativ hohe Formsteifigkeit und insbesondere starre Streben zwischen den Lagern. Im praktischen Gebrauch werden Sonnenblenden klimabedingten großen Temperaturschwankungen ausgesetzt, wodurch sich Schwierigkeiten ergeben. Denn Verstärkungseinlagen aus Kunststoff besitzen bei Wärmeeinwirkung einen wesentlich höheren Ausdehnungskoeffizienten als solche aus Blech oder Draht. Dadurch bedingt kommt es durch Klimaeinwirkung zur Längenäderung, bei Wärmeeinwirkung insbesondere zur Längenzunahme der starren Streben zwischen den Lagern, was ein Ausknicken des Sonnenblendenkörpers rechtwinklig zur Blendenebene zur Folge hat. Dieser Umstand ist nicht nur für das optische Erscheinungsbild der Sonnenblende von Nachteil, sondern kann auch die Funktionstüchtigkeit des Sonenblendenkörpers durch klemmende Lager beeinträchtigen.

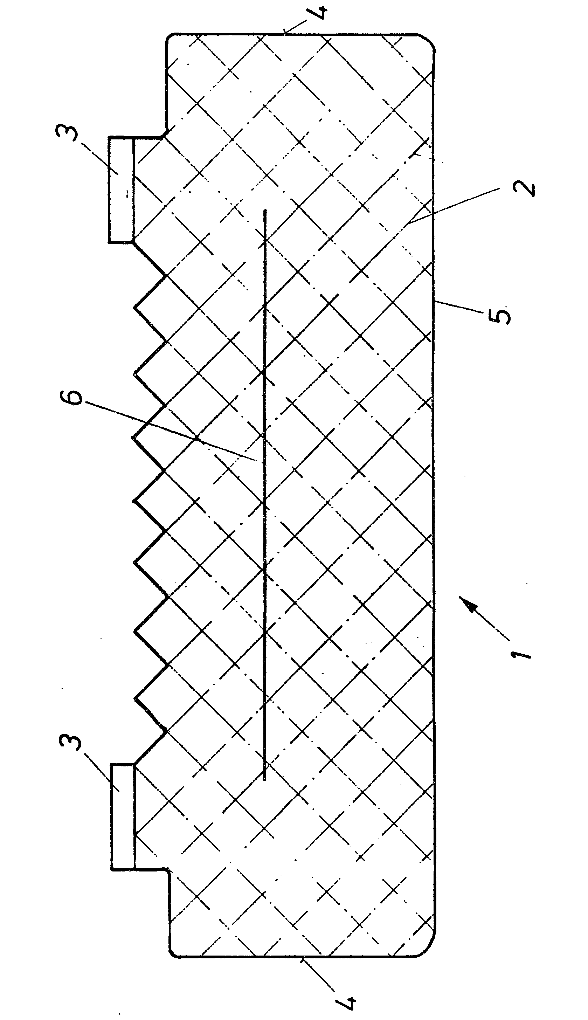

In der DE—A—25 21 823 ist eine Versteifungseinlage für Sonnenblenden angegeben, die als in und entgegen seiner Längsrichtung sowie Querrichtung elastisch verformbarer und nach einer Verformung seine Ausgangsform im wesentlichen rückbildender gitterförmiger Kunststoffrahmen ausgebildet ist. In dieser Druckschrift fehlt jedoch jeglicher Hinweis darauf, mit welchen Mitteln die elastische Verformbarkeit erzielt werden kann, so daß im Hinblick auf die Zeichnung dieser Druckschrift nur zu vermuten ist, daß die Verstärkungseinlage aus einem sehr weich eingestellten Kunststoffmaterial bestehen soll, wodurch die Formbestäudigkeit verringert wird.

Die FR—A—2 113 772 offenbart eine Sonnenblende mit einer Verstärkungseinlage, die aus einem eine Gitterstruktur aufweisenden Rahmen besteht, wobei die Hohlräume wenigstens zum überwiegenden Teil durch kreisförmige Ringe aus zur Blendenebene hochkant stehenden Rippen begrenzt sind, die mit in der Längsrichtung der Blende liegenden Rippen verbunden sind, wobei der Abstand der Ringe voneinander ihre ungehinderte Verformung beim Zusammendrücken der Blende in deren Querrichtung gewährleistet. Die Nachgiebigkeit der Sonnenblende in ihrer Querrichtung kann erhöht werden, wenn bei dem Rahmen die längs seines Außenrahmens liegenden Ringe nach der entsprechenden Außenseite der Blende hin offene Kreissegmente bilden. Diese bekannte Sonnenblende ist zwar in ihrer Querrichtung elastisch verformbar, jedoch in ihrer Längsrichtung formbeständig, so daß sie unter Wärmeeinwirkung rechtwinklig zur Blendenebene ausknicken kann.

Die Möglichkeit, daß der Sonnenblendenkörper bei Wärmeeinwirkung ausknickt, ist auch bei einer weiterhin bekannten Sonnenblende nach der FR—A—2 324 478 gegeben, obgleich auch diese Sonnenblende in ihrer Querrichtung elastisch verformbar ist.

Es ist daher Aufgabe der Erfindung, eine Sonnenblende der eingangs näher erwähnten Art mit einer aus Kunststoff bestehenden Verstärkungseinlage zu schaffen, die einen Dehnungsausgleich des Sonnenblendenkörpers im Bereich zwischen den Lagernaben ermöglicht.

Diese Aufgabe wird erfindungsgemäß dadurch gelöst, daß der zwischen den Lagernaben befindliche Bereich der Rahmenleiste zick-zack- oder mäanderförmig verlaufend ausgebildet ist. Durch diese erfindungsgemäße Maßnahme kommt die bisher übliche starre Verstrebung zwischen den Lagern in Fortfall und es wird ein elastischer Ausgleich bei Längenänderung der Verstärkungseinlage erreicht, ohne daß dabei der Sonnenblendenkörper über die schmale Seite ausknickt.

Die für die Funktion der Sonnenblende wichtige steife Ausbildung der Verstärkungseinlage winklig zur Sonnenblendenkörperebene bleibt erhalten bzw. kann bei gleichem Materialeinsatzgewicht der Verstärkungseinlage noch erhöht werden. Nach der Erfindung kann nämlich das zwischen den Lagern gegenüber den herkömmlichen Ausführungen eingesparte Material ganz oder teilweise anderweitig zur Versteifung der Verstärkungseinlage genutzt werden. Insofern sieht die Erfindung vor, daß die Verstärkungseinlage eine angeformte, etwa parallel zu den Lagernaben ausgerichtete Versteifungsrippe aufweist, die sich ganz oder bereichsweise über ihre Länge erstreckt. Hierdurch wird eine zusätzliche Verstärkung des Sonnenblendenkörpers in der Hauptspannungsrichtung erzielt.

Auf der Zeichnung ist eine Verstärkungseinlage für eine erfindungsgemäße Sonnenblende in schematischer Darstellungsmanier gezeigt.

Die Verstärkungseinlage 1 besitzt eine Netz- oder Gitterstruktur, die aus sich kreuzenden Streben 2 gebildet ist. An einer Längsseite der Verstärkungseinlage 1 sind zwei Lagernaben 3 einstückig angeformt, die sich nahe an den Stirnenden 4 der Verstärkungseinlage befinden und die miteinander fluchten. Die Verstärkungseinlage besitzt eine ihren Umfang abgrenzende peripherische Rahmenleiste 5, deren Querschnitt z.B. rechteckig oder Z-förmig ist. Der zwischen den Lagernaben 3 befindliche Bereich der Rahmenleiste 5 besitzt eine zick-zack-förmige Ausbildung, so daß dieser Bereich in Richtung der Sonnenblendenkörperebene faltenbalgähnlich verformbar ist. Wichtig ist, daß die Streben 2 winklig zur Fluchtebene der Lagernaben 3 ausgerichtet sind, da sie somit die Verformbarkeit der Rahmenleiste 5 in dem zick-zack-förmig gestalteten Bereich nicht behindern.

In der Hauptspannungsebene der Verstärkungseinlage ist eine zusätzliche Versteifungsrippe 6 angeformt, die die Streben 2 miteinander verbindet und die beidseitig nicht die Ebene der Verstärkungseinlage 1 uberragt.

## Patentansprüche

1. Sonnenblende für Fahrzeuge, im wesentlichen bestehend aus einem relativ flachen, länglich ausgebildeten Sonnenblendenkörper mit einer in einer Umpolsterung eingelagerten Verstärkungseinlage (1) aus Kunststoff, die eine ihren Umfang abgrenzende peripherische Rahmenleiste (5) mit zwei an einem Längsrand im Abstand voneinander angeformten und miteinander fluchtenden Lagernaben (3) und eine durch winklig zur Fluchtebene der Lagernaben (3) ausgerichtete Streben (2) gebildete Netz- oder Gitterstruktur aufweist, wobei die Rahmenleiste (5) bereichsweise zick-zack- oder mäanderförmig verlaufend ausgebildet und in diesem Bereich in Richtung der Blendenkörperebene verformbar ist, dadurch gekennzeichnet, daß der zwischen den Lagernaben (3) befindliche Bereich der Rahmenleiste (5) zick-zack- oder mäanderförmig verlaufend ausgebildet ist.

2. Sonnenblende nach Patentanspruch 1 dadurch gekennzeichnet, daß die Verstärkungseinlage (1) eine angeformte, parallel zu den Lagernaben (3) ausgerichtete Versteifungsrippe (6) aufweist, die sich ganz oder bereichsweise über ihre Länge erstreckt.

## Revendications

1. Pare-soleil pour véhicules, constitué essentiellement par un corps relativement plat et long, comprenant un élément de renforcement interne (1) en matière synthétique inséré dans un rembourrage externe, cet élément étant pourvu d'une bordure périphérique (5) limitant son pourtour et portant deux charnières de support (30) constituées sur un rebord longitudinal à une certaine distance l'une de l'autre et en alignement l'une avec l'autre, ainsi qu'une structure en treillis ou en grillage constituée par des entretoises (2) orientées selon un certain angle par rapport au plan d'alignement des charnières de support (3), la bordure (5) du cadre étant constituée dans une certaine zone en zig-zag ou en méandre et pouvant être déformée dans cette zone en direction du plan du corps du pare-soleil, caractérisé en ce que la zone de la bordure (5) du cadre qui est située entre les charnières de support (3) a une forme en zig-zag ou en méandre.

2. Pare-soleil selon la revendication 1, caractérisé en ce que l'élément de reforcement interne (1) comprend une nervure de renfort (6) formée d'un seul tenant avec lui, orientée parallèlement aux charnières de support (3) et s'étendant soit totalement soit partiellement sur sa longueur.

## Claims

1. A sun visor for a vehicle, the visor comprising a comparatively shallow elongate sun visor body having a reinforcing insert (1) of a synthetic plastics material, which insert is embedded in padding and bounded by a peripheral border fillet (5) provided with two integrally formed aligned support studs (3) spacedly disposed on a longitudinal edge thereof, and which has a network or lattice structure formed by struts (2) extending at an angle to the plane containing the aligned support studs (3), wherein the border fillet (5) in a section thereof is of zigzag or meandering configuration and, within this section, is deformable in the direction of the plane containing the sun visor body, characterized in that the section of the border fillet (5) disposed between the support studs (3) is of zizag or meandering configuration.

2. A sun visor according to claim 1, characterized in that the reinforcing insert (1) is provided with an integrally formed bracing rib (6) extending parallel with the support studs (3) along the insert's full length or a part thereof.